# EUROPÄISCHE PATENTSCHRIFT

(11) **EP 0 677 250 B1**
(45) Veröffentlichungstag und Bekanntmachung des Hinweises auf die Patenterteilung: **24.06.1998**
(21) Anmeldenummer: 95105213.3
(22) Anmeldetag: 06.04.1995
(51) Int. Cl.: A23L 1/31, A23L 3/48, A23L 3/3409, A23L 3/00, A23L 3/358, A23B 4/023

(54) **Verfahren zur Herstellung von abgereiften Rohfleisch-Scheiben**
Method of producing ripened raw-meat slices
Méthode de préparation des tranches de viande crue muries

(30) Priorität: 12.04.1994 IT BZ940023
(43) Veröffentlichungstag der Anmeldung: 18.10.1995
(73) Patentinhaber: Mach, Brunhilda, I-39025 Naturno (Bolzano) (IT)
(72) Erfinder: Mach, Brunhilda, I-39025 Naturno (Bolzano) (IT)
(74) Vertreter: Oberosler, Ludwig

(56) Entgegenhaltungen:
- DE-A- 2 338 692
- DE-A- 3 538 567
- US-A- 4 126 705
- US-A- 4 265 918
- DATABASE WPI Section Ch, Week 8439 Derwent Publications Ltd., London, GB; Class D12, AN 84-240600 & JP-A-59 143 544 ( MARUTOMO KK) , 17.August 1984
- PATENT ABSTRACTS OF JAPAN vol. 014 no. 299 (C-0733) ,27.Juni 1990 & JP-A-02 097364 (MEIJI MILK PROD CO LTD) 9.April 1990,

## Beschreibung

Es sind verschiedene Verfahren für die Herstellung von Rohschinken mit Knochen und ohne Knochen bekannt, welcher geräuchert oder ohne Räucherung heranreifen kann; es sind weiters verschiedene Verfahren auch für die Herstellung von getrocknetem, gegebenenfalls geräuchertem, Nichtschweinefleisch bekannt. Die durch diese Verfahren hergestellten Produkte sind unter den Warenbezeichnungen "Rohschinken", "Speck", bzw. Bresaola", "Bündner Fleisch" bekannt und kommen als Stückware, als für den Aufschnitt zurechtgerichtete Stücke oder auch bereits aufgeschnitten, in Kunststoffverpackung, unter Vakuum mit oder ohne Begasung, in den Handel.

All diese angeführten Verfahren sind durch die langen Trockenzeiten gekennzeichnet, insbesondere bei Produkten von traditioneller Qualität ist die lange Reife- und Lagerungszeit ausschlaggebend; ein weiteres Merkmal ist durch den Salzgehalt und durch die Zeiten der Pökelung gegeben wobei die Qualität vom Reifeprozess und von der Lagerung in Räumen bei kontrolliertem Feuchtegehalt und überwachter Lüftung abhängig ist. Insbesondere die Zeiten der Pökelung, bzw. des Eindringens des Salzes, die Trocknung sowie auch der Reife und der Lagerung sind in erster Linie von der Dicke und von der Stückgröße des Fleisches abhängig; diese Zeiten beeinflussen natürlich wesentlich die Produktionskosten und zwar nicht nur wegen unverzinsten Lagerkapitals sondern auch wegen dem Ausmaß der Lager- und Reifezellen sowie wegen der erforderlichen Betriebskosten dieser.

Die so erhaltenen Produkte, in bereits aufgeschnittener Form oder in Stückware für den Aufschnitt unmittelbar vor dem Verzehr bestimmt, weisen das Merkmal einer gewissen, fast homogenen Geschmeidigkeit und Elastizität, sei es für den Fettanteil als auch für den Mageranteil, auf; die Scheiben legen sich also gleichmäßig in ihrem gesamten Ausmaß an die Auflagefläche an. Bei der Verkostung päsentieren sich diese Scheiben faserig in einer für gelagertes Rohfleisch typischen Konsistenz.

Die Erfindung stellt sich die Aufgabe ein Verfahren zur Herstellung von aufgeschnittenem, abgereiftem, Rohfleisch der eingangs erwähnten Art zu schaffen wobei insbesondere die Trocken- und Reifezeiten verkürzt werden um ein Produkt zu erhalten welches sich ästhetisch anders als die bekannten Schnittwaren präsentiert und an Genießbarkeit und Haltbarkeit gegenüber diesen gewinnt.

Zur Lösung dieser Aufgabe schlägt die Erfindung vor die Trocknung und den Reifeprozess nicht an der Stückware durchzuführen sondern an der Schnittware von Stücken welche vorher gepökelt, aromatisiert und/oder geräuchert wurden. Durch die Tatsache, daß die Trocknung und der Reifeprozess an der Schnittware, eventuell unter Tiefgefrierung um möglichst dünne und gleichmäßige Schnittware zu erhalten, durchgeführt wird, kann der Prozentsatz an Salz während der Pökelung geringer sein weil bei anschließender Trocknung eine Salzkonzentrierung auf die erwünschten Werte stattfindet, ohne dabei das Risiko einer zu hohen Wasseraktivität einzugehen. Weiters wird bei der Bearbeitungen der Schnittware eine vorteilhafte schnelle Verminderung, bzw. Eliminierung, der Ammoniakanteile und anderer unerwünschter Stoffe, welche im Rohfleisch, insbesondere im Schweinefleisch, zugegen sind, erreicht.

Erfindungsgemäß kann die Trocknung auf verschiedene Weise stattfinden, vorteilhaft erfolgt die Trocknung an der einschichtig, auf netz- oder gitterförmiger Unterlage, ausgelegter Schnittware in einem gekühlten und/oder ventilierten Raum. Die Praxis hat gezeigt, daß die getrockneten Scheiben eine gewellte, gekräuselte Form annehmen und ihre Geschmeidigkeit dabei verlieren indem sie sich , insbesondere was den Mageranteil betrifft, brüchig und knusperig präsentieren.

Besagte Form und Konsistenz lassen eine Verpackung in loser Form, in S loser Form, in Säckchen, als vort die Schnittware, nicht wie jene der herkömmlich produzierten Ware, aneinanderklebt, sondern als einzelne Scheiben leicht von Hand einzeln entnehmbar ist. Die gleichmäßige Austrocknung der Scheiben bewirkt eine organolektische Homogenität und schließt unerwünschte Geschmacksveränderungen durch eine zu hohe Wasseraktivität, sowie die Bildung eines Schimmelpilz-Belages und/oder von Verkrustungen aus.

Die Erfindung wird anhand eines Ausführungsbeispieles des erfindungsgemäßen Verfahrens, angewandt auf die Herstellung von geräuchertem, beinfreiem Rohschinken ("Speck") in Scheibenform, näher erklärt; die nach diesem Verfahren hergestellten Scheiben sind in den beigelegten Abbildungen gezeigt.

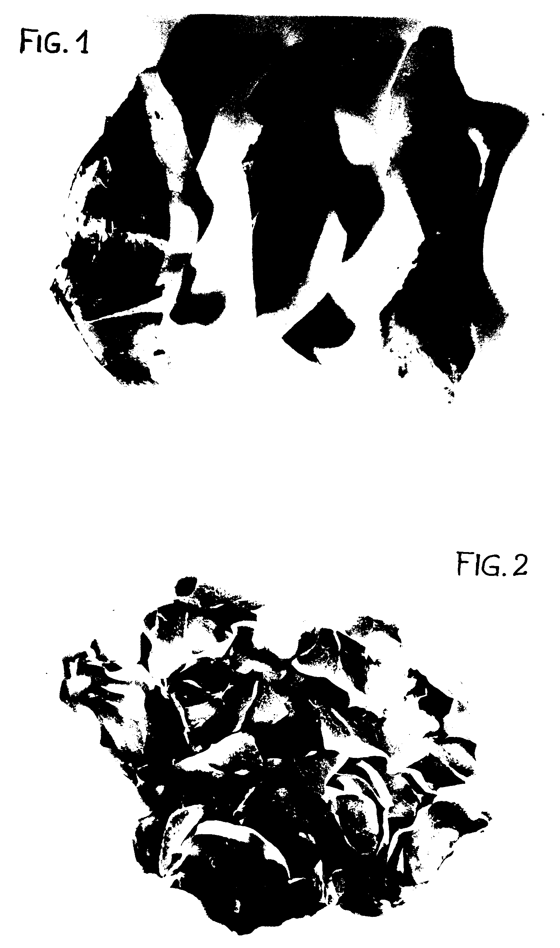

Die Fig.1 zeigt drei "Speck"-Scheiben welche durch das erfindungsgemäße Verfahren hergestellt wurden.
Die Fig.2 zeigt ein loses Häufchen von "Speck"-Scheiben welche durch das erfindungsgemäße Verfahren hergestellt wurden.
Die hintere Schweinskeule wird auf die selbe Weise wie bei der traditionellen Speckherstellung entbeint und beschnitten, sie wird der Pökelung mit einer begrenzten Salzkonzentration, unter Beachtung der folgenden schnellen Austrocknung der Schnittware, unterzogen.
Nach Abschluß der Pökelung und der Aromatisierung des Produktes wird dieses, eventuell auf traditionelle Art geräuchert. Nach der Räucherung wird das Produkt, nachdem die Schwarte entfernt worden ist und es eventuell tiefgefrohrenem Zustand, fein aufgeschnitten.
Die Schnittware wird vorzugsweise in einer einzigen Schicht auf eine Gitter- oder Netzstruktur, z.B. auf ein Förderband abgelegt und der Trocknung ausgesetzt welche in einem Raum mit kontrollierter Feuchtigkeit, mit oder ohne Einsatz von Kühlung, erfolgen kann. Die Reiung, bzw. die Lagerung erfolgt gleich wie die Trocknung, gegebenenfalls unter anderen Feuchtigkeitswerten und unter einer Behandlung welche dem Endprodukt die typische Knusprigkeit und Zerbrechlichkeit im erwünschten Ausmaß verleiht.
Die Verpackung der durch das erfindungsgemäße Verfahren hergestellten Scheiben erfolgt vorteilhaft lose in dichtverschlossenen Säckchen wodurch die Knusprigkeit erhalten bleibt.
Insbesondere die schnelle Trocknung, ermöglicht durch die dünne Scheibenform, bringt nicht nur eine Reduzierung der Produktionszeiten mit sich sondern ermöglicht es die Wasseraktivität, die Schimmelbildung, die Verkrustung und Geschmacksveränderung sowie den Befall durch Parasiten entscheidend zu verhindern.
Die Erfindung schließt nicht aus, während der Bearbeitungsfasen des aufgeschnittenen Produktes, auch Aromatisierungs- und/oder Räucherungs- und/oder Konservierungsverfahren anzuwenden.

## Patentansprüche

1. Verfahren zur Herstellung von brüchigem und knusprigem, in Scheiben geschnittenem, gereiftem Schweinerohschinken oder Schweinespeck, dadurch gekennzeichnet, daß an der Stückware die Pökelung oder Salzung mit einer geringen Salzperzentualität, in Abhängigkeit zu der folgenden gleichmäßigen Trocknung des Produktes, erfolgt, daß die Aromatisierung und/oder die Räucherung auf bekannte Art ebenfalls an der Stückware erfolgt und daß die Trocknung, der Reife- und Lagerungsprozess an dem vorher in dünne Scheiben geschnittenen Produkt durchgeführt wird.

2. Verfahren gemäß Anspruch 1, dadurch gekennzeichnet, daß die Dauer der an der Stückware durchgeführten Pökelung, Salzung, Aromatisierung und Räucherung zu der folgenden an der Schnittware durchgeführten Trocknung, welche gleichmäßig und homogen über die Gesamtausdehnung der einzelnen dünnen Scheiben erfolgt, im Verhältnis steht weil diese, im Verhältnis zum Produktvolumen, wegen der Feinheit der Scheiben eine hohe Außenoberfläche aufweisen.

3. Verfahren gemäß Anspruch 1, dadurch gekennzeichnet, daß die Trocknung mit oder ohne Einsatz von Kühlung, mit oder ohne Wärmeeinwirkung, erfolgt.

4. Verfahren gemäß den Ansprüchen 1 und 3, dadurch gekennzeichnet, daß das in dünne Scheiben geschnittene Produkt während der Trocknung, Reifung und Lagerung einschichtig und vorzugsweise auf einer gitter- oder netzartigen Unterlage aufliegt.

5. Verfahren gemäß Anspruch 1, dadurch gekennzeichnet daß, insbesondere in der letzten Phase der Trocknung, das Produkt einer solchen Feuchtigkeit und Temperatur ausgesetzt wird, daß ein knusperiges und brüchiges Endprodukt erreicht wird.

6. Verfahren gemäß Anspruch 1, dadurch gekennzeichnet, daß während der Bearbeitung der Schnittware auch eine Aromatisierung und/oder Räucherung und/oder ein Konservierungsprozess erfolgt.

7. Nach Schutzanspruch 1 erzeugtes Produkt, dadurch gekennzeichnet, daß das Endprodukt in Scheibenform, insbesondere während der Trocknungsphasen, eine wellige Form annimmt und beibehält und dabei seine für Rohfleisch typische Elastizität verliert und sich knusperig und brüchig zur Verkostung präsentiert.

## Claims

1. Method of producing crisp and friable slices of ripened raw pork ham or bacon, characterized in that the unsliced ham or bacon can be cured or salted at a lower salt percentage thanks to the subsequent homogeneous drying of the slices, in that flavouring and/or smoking is performed in the customary way on the unsliced ham or bacon, and in that the drying, ripening and storing processes take place after the ham or bacon has been cut into thin slices.

2. Procedure as in claim 1, characterized in that the duration of the salting, flavouring and smoking processes performed on the unsliced ham or bacon is directly related to the subsequent homogeneous drying of the total extent of individual thin slices, whose external surface, in relation with the overall product volume, is much larger than that of the unsliced product.

3. Procedure as in claim 1, characterized in that drying takes place with or without cooling, with or without thermal influence.

4. Procedure as in claims 1 and 3, characterized in that during drying, ripening and seasoning the thinly sliced ham or bacon is arranged in single layers, preferably on a latticed support.

5. Procedure as in claim 1, characterized in that humidity and temperature, especially towards the end of the drying process, are such that the ham or bacon slices will become crispy and friable.

6. Procedure as in claim 1, characterized in that processing of the sliced product also envisages flavouring and/or smoking and/or preserving.

7. The product resulting from the procedure in claim 1, characterized in that the sliced end product, especially during the drying phases, assumes and maintains a wavy shape, losing the elasticity typical of raw meat and becoming friable and crisp.

## Revendications

1. Méthode de fabrication de jambon cru de porc ou de lard friable et croustillant coupé en tranches et mûri, caractérisée par le fait que la saumure ou le salage du produit entier est réalisé avec un faible pourcentage de sel compte tenu du séchage successif uniforme du produit, que l'aromatisation et/ou le fumage, selon un procédé connu, sont également réalisés sur le produit entier, et que les procédés de séchage, de mûrissement et d'entreposage sont réalisés sur le produit préalablement coupé en fines tranches.

2. Méthode conforme à la revendication 1, caractérisée par le fait que la durée de la saumure, du salage, de l'aromatisation et du fumage réalisés sur le produit entier est en rapport avec le séchage successif réalisé sur le produit en tranches, lequel doit être fait de façon régulière et homogène sur toute la surface des tranches fines, car celles-ci, en liaison avec le volume du produit, présentent de par leur finesse une importante surface élevée.

3. Méthode conforme à la revendication 1, caractérisée par le fait que le séchage peut faire appel ou non à la réfrigération et à la chaleur.

4. Méthode conforme aux revendications 1 et 3, caractérisée par le fait que le produit coupé en fines tranches est déposé sur une seule couche durant le séchage, le mûrissement et l'entreposage, de préférence sur un support en forme de grille ou de réseau.

5. Méthode conforme à la revendication 1, charactérisée par le fait que, surtout lors de la dernière phase de séchage, le produit doit être exposé à un degré d'humidité et de température tel qu'on obtienne un produit final croustillant et friable.

6. Méthode conforme à la revendication 1, caractérisée par le fait que, durant le traitement du produit en tranches, un procédé d'aromatisation et/ou de fumage et/ou de conservation est également appliqué.

7. Le produit fabriqué selon la revendication 1 est caractérisé par le fait que le produit final en tranches, surtout durant les phases de séchage, prend et garde une forme ondulée, qu'il perd l'élasticité typique de la viande crue et se présente friable et croustillant à la dégustation.
